# EUROPEAN PATENT SPECIFICATION

(11) **EP 4 198 377 B1**
(45) Date of publication and mention of the grant of the patent: **02.12.2026**
(21) Application number: 21856005.0
(22) Date of filing: 13.08.2021
(51) Int. Cl.: G02B 3/00, G02B 5/02, G03B 21/20, G02B 19/00

(54) **OPTICAL SYSTEM, DISPLAY DEVICE, PROJECTION DEVICE, AND ILLUMINATION DEVICE**
OPTISCHES SYSTEM, ANZEIGEVORRICHTUNG, PROJEKTIONSVORRICHTUNG UND BELEUCHTUNGSVORRICHTUNG
SYSTÈME OPTIQUE, DISPOSITIF D'AFFICHAGE, DISPOSITIF DE PROJECTION ET DISPOSITIF D'ÉCLAIRAGE

(30) Priority: 14.08.2020 JP 2020136940
(43) Date of publication of application: 21.06.2023
(73) Proprietor: Dexerials Corporation, Shimotsuke-shi, Tochigi 323-0194 (JP)
(72) Inventor: SHIBUYA Kazuyuki, Shimotsuke-shi, Tochigi 323-0194 (JP); KANASUGI Shunsuke, Shimotsuke-shi, Tochigi 323-0194 (JP); ARIMA Mitsuo, Shimotsuke-shi, Tochigi 323-0194 (JP); HANASHIMA Naoki, Shimotsuke-shi, Tochigi 323-0194 (JP)
(74) Representative: Lavoix
(86) International application number: PCT/JP2021/029838
(87) International publication number: WO 2022/034926

(56) References cited:
- WO-A1-2006/095855
- WO-A1-2006/137459
- JP-A- 2008 134 269
- JP-A- 2010 060 912
- JP-A- 2012 234 161
- US-A1- 2008 187 012
- US-A1- 2010 053 565
- US-A1- 2019 064 400

## Description

### TECHNICAL FIELD

The present invention relates to an optical system, a display device, a projection device, and an illumination device.

### BACKGROUND ART

A diffusion plate diffuses incident light in various directions. Diffusion plates are used in various applications such as displays, projectors, and illuminations.

For example, Patent Document 1 describes a projector using laser light emitted from a laser light source. The projector described in Patent Document 1 displays a rectangular image by causing laser light to pass through a diffusion plate and a light pipe. Further, Patent Document 2 describes a light source device that has a plurality of diffusion regions. The plurality of diffusion regions are provided adjacent to each other and have different diffusion characteristics. Each of the plurality of diffusion regions is rotatable around a rotation axis.
US2008187012A1 relates to a light source device generates irradiation light that is irradiated onto a predetermined face, the light source device including: a laser light source that emits laser light; a diffractive optical element that diffracts the laser light; a diffusion optical element that has an incidence face into which the laser light is incident and a light emission face from which the laser light from the incidence face is emitted, and that diffuses the laser light; and unit structures that are two-dimensionally arrayed on at least one of the incidence face and the light emission face of the diffusion optical element, and that cause the light which is perpendicularly incident into the diffusion optical element to refract at one time, and then emit this light toward the predetermined face.
US2019064400A discloses a light source device comprising a microlens array as a diffuser plate, a rotary diffusion plate and a lens array plate.

### [Citation List]

### [Patent Document]

[Patent Document 1]
   Japanese Patent No. 4235769
[Patent Document 2]
   Japanese Patent No. 6160117

### SUMMARY OF INVENTION

### Technical Problem

In the projector described in Patent Document 1, light that is diffused in a circular shape by the diffusion plate is incident on the rectangular light pipe. As a result, in the projector described in Patent Document 1, an input loss of light occurs. Further, in the light source device of Patent Document 2, when a light diffusion element having the plurality of diffusion regions rotates, the shape of the diffused light becomes circular. As a result, in the light diffusion element described in Patent Document 2, an input loss of light occurs.

The present invention has been made in view of the above problems, and an object the present invention is to provide an optical system, a display device, a projection device, and an illumination device with high light utilization efficiency.

### Solution to Problem

In order to solve the above problems, the present invention provides the following means.

An optical system according to a first aspect is provided according to claim 1. The dependent claims set out particular embodiments of the invention.

In the optical system according to the aspect described above, the fixed diffusion plate and the relative movement diffusion plate may be arranged in the order of the fixed diffusion plate and the relative movement diffusion plate in the traveling direction of the light.

In the optical system according to the aspect described above, the fixed diffusion plate and the relative movement diffusion plate may be arranged in the order of the relative movement diffusion plate and the fixed diffusion plate in the traveling direction of the light.

In the optical system according to the aspect described above, the relative movement diffusion plate may be a rotating diffusion plate that is rotatable and a rotating surface of the relative movement diffusion plate intersects with the traveling direction of the light.

In the optical system according to the aspect described above, in the relative movement diffusion plate, convex lenses or concave lenses with random radii of curvature may be randomly disposed on the diffusion surface.

In the optical system according to the aspect described above, when a diffusion angle of the fixed diffusion plate is θa and a diffusion angle of the relative movement diffusion plate is θb, θb/θa ≤ 0.76 may be satisfied.

A display device according to a second aspect includes the optical system according to the aspect described above.

A projection device according to a third aspect includes the optical system according to the aspect described above.

An illumination device according to a fourth aspect includes the optical system according to the aspect described above.

### Advantageous Effects of Invention

According to the optical system according to the above aspect, it is possible to enhance the light utilization efficiency.

### BRIEF DESCRIPTION OF DRAWINGS

FIG. 1 is a schematic view of an optical system according to a first embodiment.
FIG. 2 is a plan view of a fixed diffusion plate according to the first embodiment.
FIG. 3 is a cross-sectional view of the fixed diffusion plate according to the first embodiment.
FIG. 4 is a cross-sectional view for explaining an example of a method of manufacturing a fixed diffusion plate.
FIG. 5 is a cross-sectional view for explaining an example of a method of manufacturing a fixed diffusion plate.
FIG. 6 is a schematic view for explaining a definition of a diffusion angle of each of a fixed diffusion plate and a rotating diffusion plate.
FIG. 7 is a schematic view of an optical system according to a first modification example.
FIG. 8 is a schematic view of a display device according to a first application example.
FIG. 9 is a schematic view of an evaluation device for examples and comparative examples.
FIG. 10 is a schematic view for explaining a method of evaluating diffused light.
FIG. 11 is a graph summarizing the results of the examples and the comparative examples.

### DESCRIPTION OF EMBODIMENTS

Hereinafter, the present embodiment will be described in detail with appropriate reference to the drawing. In the drawings used in the following description, characteristic portions may be enlarged for convenience to make it easier to understand the characteristics, and the dimensional ratios of each component may differ from the actual ones.

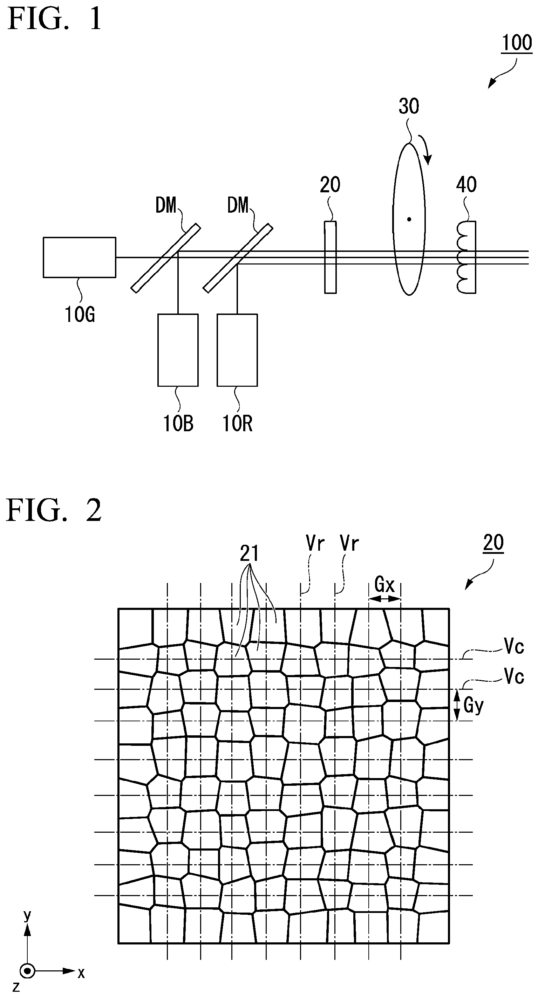

FIG. 1 is a schematic view of an optical system 100 according to a first embodiment. The optical system 100 includes coherent light sources 10B, 10G, and 10R, a fixed diffusion plate 20, a rotating diffusion plate (a relative movement diffusion plate) 30, and an integrator lens 40. The optical system 100 shown in FIG. 1 also includes a dichroic mirror DM.

First, directions will be defined. A surface on which the fixed diffusion plate 20 spreads is defined as an xy plane, an arbitrary direction on the xy plane is defined as an x direction, and a direction perpendicular to the x direction is defined as a y direction. The x direction is an example of a column direction. The y direction is an example of a row direction. Further, a direction orthogonal to the xy plane of the fixed diffusion plate 20 is defined as a z direction.

The coherent light sources 10B, 10G, and 10R emit coherent light. The coherent light sources 10B, 10G, 10R are lasers, for example. The coherent light source 10B shown in FIG. 1 is a blue laser, the coherent light source 10G shown in FIG. 1 is a green laser, and the coherent light source 10R shown in FIG. 1 is a red laser. In the coherent light source, each color may be prepared, or yellow, green, and red may be produced by irradiating a phosphor with a blue laser. In FIG. 1, each color emitted from each of the coherent light sources 10B, 10G, and 10R is converged using a dichroic mirror DM to realize white.

Coherent light produces speckle noise. The speckle noise is a fine random interference pattern generated as noise by a diffusion action of an irradiated object (for example, a screen) and interference with coherent laser light. For example, the speckle noise causes significant degradation of image quality. When the speckle noise occurs, each color glares and does not become white.

The light from each of the coherent light sources 10B, 10G, and 10R is incident on the fixed diffusion plate 20 and the rotating diffusion plate 30. When the coherent light is spread by the fixed diffusion plate 20 and the rotating diffusion plate 30, the speckle noise is reduced. In the optical system 100 shown in FIG. 1, the fixed diffusion plate 20 and the rotating diffusion plate 30 are arranged in that order in a traveling direction of the light.

The fixed diffusion plate 20 is a rectangular diffusion plate that diffuses the incident light in a rectangular shape. Diffusing the incident light in a rectangular shape means that a ratio of a 10% angular width of the diffused light in the x direction to a 10% angular width of the diffused light in an xy direction is less than 1 (10% angular width of diffused light in x direction / 10% angular width of diffused light in xy direction < 1.0). The 10% angular width of the diffused light is a range of an angle in which an intensity distribution is fitted through a Gaussian function and an intensity is 10% or more of the maximum intensity in a fitting curve.

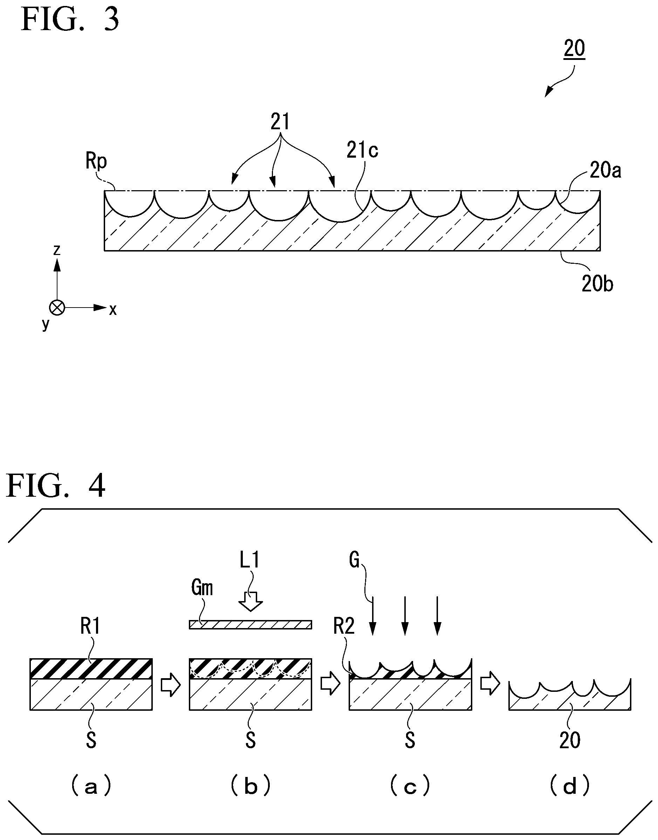

The fixed diffusion plate 20 is, for example, a microlens array. FIG. 2 is a plan view of the fixed diffusion plate 20 according to the first embodiment. FIG. 3 is a cross-sectional view of the fixed diffusion plate 20 according to the first embodiment. FIG. 3 is a cross section of the fixed diffusion plate 20 cut along a virtual column line Vc in FIG. 2.

The fixed diffusion plate 20 has a plurality of microlenses 21 arranged in a matrix in a plan view in the z direction, for example. Each of the microlenses 21 is, for example, substantially rectangular. Each of the plurality of microlenses 21 is arranged on the basis of a basic pattern.

The basic pattern is a pattern in which basic cell regions bounded by virtual column lines Vc and virtual row lines Vr are aligned in the x direction and the y direction. The virtual column lines Vc are a plurality of virtual column lines each of which passes through an average position in the row direction (the y direction) of centers of the microlenses 21 arranged in the column direction (the x direction) and extends in the x direction. The virtual row lines Vr are a plurality of virtual row lines each of which passes through an average position in the column direction (the x direction) of centers of the microlenses 21 arranged in the row direction (the y direction) and extends in the y direction.

Specifically, the average position in the row direction (the y direction) of the centers of the microlenses 21 arranged in the column direction (the x direction) and the average position in the column direction (the x direction) of the centers of the microlenses 21 arranged in the row direction (the y direction) can be calculated by observing the microlenses 21 using an optical microscope and specifying the positions in the row direction (the y direction) of ten microlenses 21 arranged in the column direction (the x direction) and the positions in the column direction (the x direction) of ten microlenses 21 arranged in the row direction (the y direction).

A minimum unit bounded by two virtual column lines Vc and two virtual row lines Vr is a basic cell region. When a ratio of a length Gx in the x direction to a length Gy in the y direction of the basic cell region substantially matches a ratio of a length in the x direction to a length in the y direction of the integrator lens 40, which will be described later, the light utilization efficiency of the optical system 100 is particularly enhanced. Substantially matching means that a difference is within a numerical range of 10% with respect to any value.

The microlenses 21 are densely present in the fixed diffusion plate 20. That is, there is no non-lens area between the microlenses 21. Therefore, ridgelines are formed between the microlenses 21. If the height and direction of the ridgelines are irregular, a diffraction by the fixed diffusion plate 20 is curbed. The adjacent ridgelines are preferably not parallel to each other.

The microlenses 21 are, for example, concave lenses that are recessed with respect to a reference plane Rp of the fixed diffusion plate 20. The microlenses 21 may be, for example, convex lenses that project with respect to the reference plane Rp. The reference plane Rp is a plane parallel to the xy plane and in contact with the most projecting portion of a first surface 20a. The reference plane Rp is, for example, the surface of a substrate before processing concave portions that will become the microlenses 21 of the fixed diffusion plate 20. Although FIG. 3 shows an example in which the microlenses 21 are provided only in the first surface 20a of the fixed diffusion plate 20, the microlenses 21 may be provided on both the first surface 20a and a second surface 20b. A radius of curvature of each microlens 21 may be random.

The fixed diffusion plate 20 is made of, for example, a material that can transmit light in an incidence wavelength band. The fixed diffusion plate 20 is, for example, optical glass, crystal, sapphire, a resin plate, or a resin film. The optical glass is, for example, quartz glass, borosilicate glass, white plate glass, or the like. The resin is, for example, polymethyl methacrylate (PMMA), polyethylene terephthalate (PET), polycarbonate (PC), a cyclic olefin copolymer (COC), or the like. Inorganic materials such as the optical glass, the crystal, and the sapphire are excellent in light resistance. Further, the crystal and the sapphire are excellent in heat dissipation.

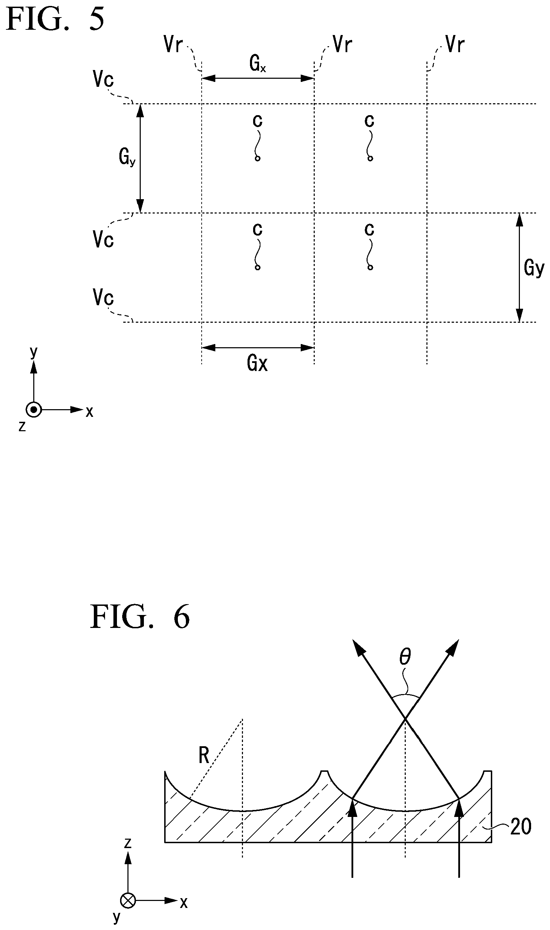

The fixed diffusion plate 20 is manufactured through a resist coating step, an exposure/development step, and an etching step. FIGS. 4 and 5 are schematic views for explaining an example of a method of manufacturing the fixed diffusion plate 20.

First, in the resist coating step, a resist R1 is coated on a substrate S as shown in FIG. 4(a). The substrate S has the same material as the fixed diffusion plate 20 because it becomes the above-described fixed diffusion plate 20 by processing. In the etching step, which will be described later, a fluorine-based etching gas (CF₄, SF₆, CHF₃, or the like) may be used as an etching gas. Al₂O₃, an alkali metal, or the like may react with the fluorine-based etching gas to become a non-volatile substance. For example, when a glass substrate containing no alkali metal but containing 27% Al₂O₃ (for example, Eagle XG made by Corning Co., Ltd.) is etched with the fluorine-based etching gas, Al₂O₃, which is difficult to etch, remains, and fine projections occur on the surface of the glass substrate. Therefore, transmittance of the glass substrate is lowered. The content of an alkali component in the substrate S is preferably 20% by mass or less and more preferably 10% by mass or less. The substrate S is preferably quartz glass or Tempax glass, for example. A known resist can be applied as the resist R1.

Then, as shown in FIG. 4(b), in the exposure step, the resist R1 is exposed by irradiating the resist R1 with light L1 via a grayscale mask Gm. For the exposure, for example, step-and-repeat exposure is performed by repeatedly exposing while moving the grayscale mask. Depending on the positional accuracy of the stepping, a joint having a maximum width of several µm may occur between the basic cells formed by one exposure. In order to avoid such problems, it is preferable to expose the basic cells such that they overlap each other. In a case where the basic cells largely overlap each other, it may be adjusted such that the desired exposure amount is obtained by performing multiple exposures.

The grayscale mask Gm is designed on the basis of the basic pattern shown in FIG. 5. The basic pattern is equivalent to the pattern formed by the virtual column lines Vc and the virtual row lines Vr described above. The grayscale mask Gm is made by shifting parameters of intervals Gₓ and G_{y} between the virtual column lines RL and the virtual row lines CL, a position of the vertex c of each microlens, and a radius of curvature of each microlens on the basis of the basic pattern. By varying these parameters, an output of a diffraction pattern from the fixed diffusion plate 20 is curbed.

Next, as shown in FIG. 4(c), in the development step, the exposed resist pattern is developed. A part of the resist R1 is removed through the development to form a resist R2 having a resist pattern on the surface thereof. A resist pattern similar to the desired microlens array is formed on the surface of the resist R2.

Next, as shown in FIG. 4(d), in the etching step, the substrate S is dry-etched via the resist R2. Dry etching is performed using a reactive gas G, for example. The gas G is, for example, the fluorine-based etching gas described above. The pattern of the microlens array formed on the surface of the resist R2 is transferred to the substrate S by the dry etching. The substrate S becomes the fixed diffusion plate 20 having the microlens array formed on the first surface.

The rotating diffusion plate 30 is rotatable with its rotating surface intersecting with the traveling direction of the light. When the rotating diffusion plate 30 rotates, a diffusion surface of the light moves relative to the incident light. The rotating diffusion plate 30 is an example of a relative movement diffusion plate. The rotating diffusion plate 30 only has to be a rotating diffusion plate in which the diffusion surface of the light moves relative to the incident light. For example, instead of the rotating diffusion plate 30, a vibration diffusion plate that vibrates may be used.

The rotating diffusion plate 30 is, for example, a frosted diffusion plate or a microlens type diffusion plate. The rotating diffusion plate 30 may be a rectangular diffusion plate that diffuses the incident light in a rectangular shape or a circular diffusion plate that diffuses the incident light in a circular shape in a non-rotating state. In a case where the rotating diffusion plate 30 is used alone, the diffused light becomes circular because the diffusion surface moves relative to the incident light regardless of whether the rectangular diffusion plate or the circular diffusion plate is used.

In the rotating diffusion plate 30, for example, the convex lenses or the concave lenses with random radii of curvature are randomly disposed on the diffusion surface. Since the radii of curvature and the arrangement are random, it is easy to spread the coherent light efficiently and reduce the occurrence of the speckle noise.

The fixed diffusion plate 20 and the rotating diffusion plate 30 may have an antireflection film on at least one surface thereof. The antireflection film is, for example, a laminated film in which a low refractive index layer and a high refractive index layer are laminated. The low refractive index layer is, for example, SiO₂, MgF₂, or CaF₂. The high refractive index layer is, for example, Nb₂O₅, TiO₂, Ta₂O₅, Al₂O₃, HfO₂, or ZrO₂. SiO₂, Nb₂O₅, and Ta₂O₅ are excellent in light resistance and are not easily deteriorated even when irradiated with high-density light emitted from a high-power laser or the like. Further, the antireflection film may have a moth-eye structure in which fine irregularities with a pitch of several hundred nm are arranged.

A diffusion angle θa of the fixed diffusion plate 20 and a diffusion angle θb of the rotating diffusion plate 30 preferably satisfy θb/θa ≤ 0.76.

The lower limit of θb/θa is preferably greater than zero. Further, it is more preferable to satisfy θb/θa ≤ 0.2.

FIG. 6 is a schematic view for explaining a definition of the diffusion angle of each of the fixed diffusion plate 20 and the rotating diffusion plate 30. The diffusion angle θ of the diffusion plate can be obtained on the basis of the following relationship from an average radius of curvature R of the lens, a refractive index n of the diffusion plate, and an average interval p between the adjacent lenses. $Diffusion angle θ = 2 {sin}^{- 1} \left\{\left(p\left(n-1\right)/2R\right)\right.$

The diffusion angle θ of the diffusion plate can also be defined as a spread angle of light emitted from the diffusion plate when parallel light is incident.

When the diffusion angles θa and θb satisfy the above relationship, the light after passing through the two diffusion plates becomes the light having the rectangular shape. As described above, in a case where the rotating diffusion plate 30 is used alone, the light that passes through it spreads in a circular shape in principle. On the other hand, when two diffusion plates are used and these two diffusion plates satisfy the above relationship, the light that passed through them becomes the light having the rectangular shape. An integrator lens and an image display device are irradiated with the light after passing through the diffusion plates. These members are quadrangular, and if the diffused light has the rectangular shape, the light utilization efficiency increases.

The integrator lens 40 is a lens that enhances the uniformity of illuminance on the irradiated surface. When the light passes through the integrator lens 40, the accuracy of the projected image increases. The integrator lens 40 is behind the fixed diffusion plate 20 and the rotating diffusion plate 30 in the traveling direction of the light.

When a ratio of a length in the x direction to a length in the y direction of the integrator lens 40 substantially matches a ratio of a length Gx in the x direction to a length Gy in the y direction of the basic cell region, the light utilization efficiency of the optical system 100 is particularly enhanced.

When the optical system according to the present embodiment is used, the light utilization efficiency is higher than in a case where a circular diffusion plate that diffuses light in a circular shape is used as the fixed diffusion plate 20. Further, when the diffusion angle θa of the fixed diffusion plate 20 and the diffusion angle θb of the rotating diffusion plate 30 satisfy a predetermined relationship, the light after passing through the two diffusion plates can be approximated to a rectangular shape, and the light utilization efficiency can be further enhanced.

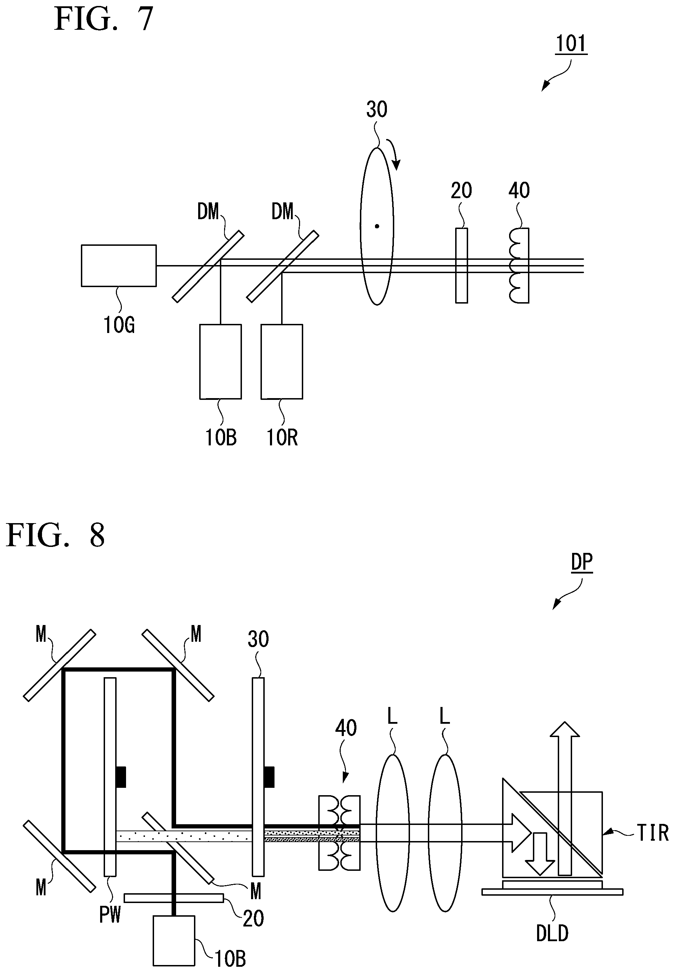

FIG. 7 is a schematic view of an optical system 101 according to a first modification example. The optical system 101 according to the first modification example differs from the optical system 100 in terms of the arrangement order of the fixed diffusion plate 20 and the rotating diffusion plate 30. In the optical system 101 according to the first modification example, the same components as those of the optical system 100 are denoted by the same reference signs, and the description thereof is omitted.

In the optical system 101 shown in FIG. 7, the rotating diffusion plate 30, the fixed diffusion plate 20, and the integrator lens 40 are arranged in that order in the traveling direction of the light. Even if the arrangement order of the rotating diffusion plate 30 and the fixed diffusion plate 20 is reversed, the light after passing through the two diffusion plates becomes the same. Therefore, the optical system 101 according to the first modification example can also obtain the same effects as the optical system 100 described above.

The optical systems 100 and 101 described above can be used for a display device, a projection device, an illumination device, and the like.

FIG. 8 is a schematic view of a display device DP according to a first application example. The display device DP is, for example, a laser television or a DLP projector. The display device DP includes a coherent light source 10B, a fixed diffusion plate 20, a plurality of mirrors M, a phosphor wheel PW, a rotating diffusion plate 30, an integrator lens 40, a plurality of lenses L, and a digital microdevice DLD, and a prism TIR.

Blue light is emitted from the coherent light source 10B. After passing through the fixed diffusion plate 20 and the phosphor wheel PW, the light is incident on the rotating diffusion plate 30. The phosphor wheel PW produces yellow (green, red) by being irradiated with a blue laser, and the light reaches the rotating diffusion plate 30. After passing through the rotating diffusion plate 30, the light is condensed by the integrating lens 40 and the plurality of lenses L. The condensed light reaches the digital microdevice DLD via the prism TIR. The digital microdevice DLD controls ON/OFF of the light and outputs the light to the outside via the prism TIR.

### [Examples]

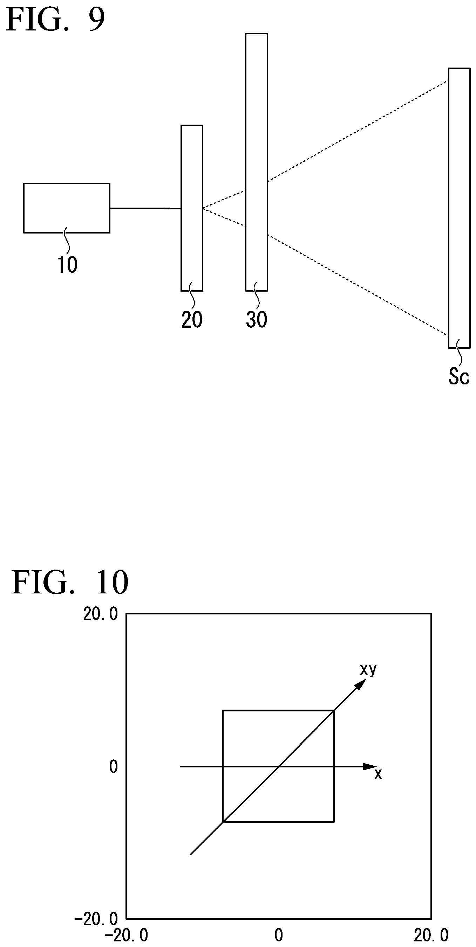

In Examples 1 to 15 and Comparative Examples 1 to 20 below, an optical system shown in FIG. 9 was designed, and the diffused light was evaluated through simulation. The optical system has a coherent light source 10, a fixed diffusion plate 20, a rotating diffusion plate 30, and a screen Sc. The coherent light source 10 outputs light with an intensity of 1 W and a spot diameter of 0.6 mm. A distance between the coherent light source 10 and the fixed diffusion plate 20 was set to 5 mm. A distance between the fixed diffusion plate 20 and the rotating diffusion plate 30 was set to 0.5 mm. A distance between the rotating diffusion plate 30 and the screen Sc was set to 200 mm. The simulation was performed using Optic Studio made by Zemax LLC.

The entire area of the screen was set to 40 mm × 40 mm, and the evaluation area was set to an area of 18.5 mm × 18.5 mm in the center of the entire area. Then, the light utilization efficiency of the evaluation area with respect to the entire area and the diffusion characteristics in the x direction and the xy direction were obtained. The xy direction is a direction that is tilted by 45° with respect to each of the x direction and the y direction. FIG. 10 is a schematic view for explaining the diffused light in the examples and the comparative examples. The diffusion properties in the x direction and the xy direction were evaluated with a 10% angular width of the diffused light in the x direction and the xy direction. As described above, the 10% angular width of the diffused light is a range of an angle in which an intensity distribution is fitted through a Gaussian function and an intensity is 10% or more of the maximum intensity in a fitting curve.

### "Examples 1 to 4 and Comparative Examples 1 to 6"

In Examples 1 to 4, the fixed diffusion plate 20 was set to a rectangular diffusion plate that diffuses the incident light in a rectangular shape, and the rotating diffusion plate 30 was set to a circular diffusion plate that diffuses the incident light in a circular shape. In Comparative Examples 1 to 6, the fixed diffusion plate 20 was set to a circular diffusion plate, and the rotating diffusion plate 30 was set to a circular diffusion plate. In Examples 1 to 4 and Comparative Examples 1 to 6, a detection intensity in the entire area was set to about 1425 mW. In Examples 1 to 4, the diffusion angle θa of the fixed diffusion plate 20 was set to 5°, and in Comparative Examples 1 to 6, the diffusion angle θa of the fixed diffusion plate 20 was set to 7°. Then, the diffusion angle θb of the rotating diffusion plate 30 was changed, and evaluation was performed in each case. Table 1 below summarizes the results.

**[Table 1]**

| | Fixed diffusion plate | | Rotating diffusio n plate | | Angu lar ratio θb/θa | Entire area detecti on intensi ty (mW) | Evaluat ion area detectio n intensit y (mW) | Light utilizati on efficien cy (evaluat ion area / entire area) | Evaluat ion area standar d deviati on | 10% angular width | | |
|---|---|---|---|---|---|---|---|---|---|---|---|---|
| | Diffus ed light shape | θ a | Diffus ed light shape | θ b | | | | | | x directi on (deg) | xy directi on (deg) | Rati o (x/x y) |
| Example 1 | Rectan gle | 5 | Circle | 1 | 0.20 | 1425 | 1359 | 95% | 0.30 | 5.6 | 7.3 | 0.77 |
| Example 2 | Rectan gle | 5 | Circle | 2 | 0.40 | 1425 | 1243 | 87% | 0.28 | 6.2 | 7.4 | 0.84 |
| Example 3 | Rectan gle | 5 | Circle | 3 | 0.60 | 1425 | 1131 | 79% | 0.25 | 6.8 | 7.7 | 0.88 |
| Example 4 | Rectan gle | 5 | Circle | 4 | 0.80 | 1425 | 1020 | 72% | 0.23 | 8.0 | 8.1 | 0.99 |
| Compara tive Example 1 | Circle | 7 | Circle | 2 | 0.29 | 1424 | 968 | 68% | 0.21 | - | - | 1.00 |
| Compara tive Example 2 | Circle | 7 | Circle | 3 | 0.43 | 1424 | 919 | 65% | 0.19 | - | - | 1.00 |
| Compara tive Example 3 | Circle | 7 | Circle | 4 | 0.57 | 1421 | 850 | 60% | 0.17 | - | - | 1.00 |
| Compara tive Example 4 | Circle | 7 | Circle | 5 | 0.71 | 1411 | 786 | 56% | 0.16 | - | - | 1.00 |
| Compara tive Example 5 | Circle | 7 | Circle | 6 | 0.86 | 1391 | 728 | 52% | 0.15 | - | - | 1.00 |
| Compara tive Example 6 | Circle | 7 | Circle | 7 | 1.00 | 1356 | 661 | 49% | 0.14 | - | - | 1.00 |

Examples 1 to 4 had higher light utilization efficiency than Comparative Examples 1 to 6. Further, when the diffusion angle θb/diffusion angle θa is smaller than 0.8, the shape of the diffused light approaches a rectangular shape.

### "Examples 5 to 8 and Comparative Examples 7 to 13"

In Comparative Examples 5 to 8, the fixed diffusion plate 20 was set to a rectangular diffusion plate, and the rotating diffusion plate 30 was set to a circular diffusion plate. In Comparative Examples 7 to 13, the fixed diffusion plate 20 was set to a circular diffusion plate, and the rotating diffusion plate 30 was set to a circular diffusion plate. In Examples 5 to 8 and Comparative Examples 7 to 13, a detection intensity in the entire area was set to about 300 mW. In Examples 5 to 8, the diffusion angle θa of the fixed diffusion plate 20 was set to 10°, and in Comparative Examples 7 to 13, the diffusion angle θa of the fixed diffusion plate 20 was set to 14°. Then, the diffusion angle θb of the rotating diffusion plate 30 was changed, and evaluation was performed in each case. Table 2 below summarizes the results.

**[Table 2]**

| | Fixed diffusion plate | | Rotating diffusio n plate | | Angu lar ratio θb/θa | Entire area detecti on intensi ty (mW) | Evaluat ion area detectio n intensit y (mW) | Light utilizati on efficien cy (evaluat ion area / entire area) | Evaluat ion area standar d deviati on | 10% angular width | | |
|---|---|---|---|---|---|---|---|---|---|---|---|---|
| | Diffus ed light shape | θ a | Diffus ed light shape | θ b | | | | | | x directi on (deg) | xy directi on (deg) | Rati o (x/x y) |
| Example 5 | Rectan gle | 1 0 | Circle | 2 | 0.20 | 356 | 343 | 96% | 0.071 | 11.6 | 14.6 | 0.79 |
| Example 6 | Rectan gle | 1 0 | Circle | 4 | 0.40 | 356 | 319 | 90% | 0.062 | 12.9 | 14.9 | 0.87 |
| Example 7 | Rectan gle | 1 0 | Circle | 6 | 0.60 | 356 | 290 | 81% | 0.058 | 14.7 | 15.3 | 0.96 |
| Example 8 | Rectan gle | 1 0 | Circle | 8 | 0.80 | 356 | 264 | 74% | 0.054 | 16.0 | 16.0 | 1.00 |
| Compara tive Example 7 | Circle | 1 4 | Circle | 2 | 0.14 | 356 | 240 | 67% | 0.047 | - | - | 1.00 |
| Compara tive Example 8 | Circle | 1 4 | Circle | 4 | 0.29 | 355 | 237 | 67% | 0.045 | - | - | 1.00 |
| Compara tive Example 9 | Circle | 1 4 | Circle | 6 | 0.43 | 355 | 226 | 64% | 0.042 | - | - | 1.00 |
| Compara tive Example 10 | Circle | 1 4 | Circle | 8 | 0.57 | 352 | 211 | 60% | 0.039 | - | - | 1.00 |
| Compara tive Example 11 | Circle | 1 4 | Circle | 1 0 | 0.71 | 347 | 192 | 55% | 0.036 | - | - | 1.00 |
| Compara tive Example 12 | Circle | 1 4 | Circle | 1 2 | 0.86 | 340 | 176 | 52% | 0.033 | - | - | 1.00 |
| Compara tive Example 13 | Circle | 1 4 | Circle | 1 4 | 1.00 | 330 | 160 | 49% | 0.029 | - | - | 1.00 |

Examples 5 to 8 had higher light utilization efficiency than Comparative Examples 7 to 13. Further, when the diffusion angle θb/diffusion angle θa is smaller than 0.8, the shape of the diffused light approaches a rectangular shape.

### "Examples 9 to 15 and Comparative Examples 14 to 20"

In Comparative Examples 9 to 15, the fixed diffusion plate 20 was set to a rectangular diffusion plate, and the rotating diffusion plate 30 was set to a circular diffusion plate. In Comparative Examples 14 to 20, the fixed diffusion plate 20 was set to a circular diffusion plate, and the rotating diffusion plate 30 was set to a circular diffusion plate. In Examples 9 to 15 and Comparative Examples 14 to 20, a detection intensity in the entire area was set to about 100 mW. In Examples 9 to 15, the diffusion angle θa of the fixed diffusion plate 20 was set to 16°, and in Comparative Examples 14 to 20, the diffusion angle θa of the fixed diffusion plate 20 was set to 22°. Then, the diffusion angle θb of the rotating diffusion plate 30 was changed, and evaluation was performed in each case. Table 3 below summarizes the results.

**[Table 3]**

| | Fixed diffusion plate | | Rotating diffusio n plate | | Angu lar ratio θb/θa | Entire area detecti on intensi ty (mW) | Evaluat ion area detectio n intensit y (mW) | Light utilizati on efficien cy (evaluat ion area / entire area) | Evaluat ion area standar d deviati on | 10% angular width | | |
|---|---|---|---|---|---|---|---|---|---|---|---|---|
| | Diffus ed light shape | θ a | Diffus ed light shape | θ b | | | | | | x directi on (deg) | xy directi on (deg) | Rati o (x/x y) |
| Example 9 | Rectan gle | 1 6 | Circle | 2 | 0.13 | 101 | 99 | 98% | 0.033 | 16.9 | 22.1 | 0.76 |
| Example 10 | Rectan gle | 1 6 | Circle | 4 | 0.25 | 101 | 97 | 95% | 0.030 | 17.7 | 23.0 | 0.77 |
| Example 11 | Rectan gle | 1 6 | Circle | 6 | 0.38 | 101 | 93 | 92% | 0.028 | 18.8 | 22.8 | 0.82 |
| Example 12 | Rectan gle | 1 6 | Circle | 8 | 0.50 | 101 | 88 | 87% | 0.027 | 20.4 | 23.4 | 0.87 |
| Example 13 | Rectan gle | 1 6 | Circle | 1 0 | 0.63 | 101 | 82 | 81% | 0.026 | 21.5 | 23.4 | 0.92 |
| Example 14 | Rectan gle | 1 6 | Circle | 1 2 | 0.75 | 101 | 78 | 77% | 0.024 | 23.3 | 24.6 | 0.95 |
| Example 15 | Rectan gle | 1 6 | Circle | 1 4 | 0.875 | 101 | 72 | 71% | 0.023 | 24.3 | 25.2 | 0.96 |
| Compara tive Example 14 | Circle | 2 2 | Circle | 4 | 0.18 | 101 | 62 | 62% | 0.018 | - | - | 1.00 |
| Compara tive Example 15 | Circle | 2 2 | Circle | 8 | 0.36 | 101 | 60 | 60% | 0.017 | - | - | 1.00 |
| Compara tive Example 16 | Circle | 2 2 | Circle | 1 2 | 0.55 | 101 | 55 | 55% | 0.015 | - | - | 1.00 |
| Compara tive Example 17 | Circle | 2 2 | Circle | 1 6 | 0.73 | 100 | 49 | 49% | 0.014 | - | - | 1.00 |
| Compara tive Example 18 | Circle | 2 2 | Circle | 2 0 | 0.91 | 98 | 45 | 45% | 0.012 | - | - | 1.00 |
| Compara tive Example 19 | Circle | 2 2 | Circle | 2 2 | 1.00 | 96 | 42 | 42% | 0.011 | - | - | 1.00 |
| Comparative Example 20 | Circle | 2 2 | Circle | 2 4 | 1.09 | 94 | 39 | 39% | 0.011 | - | - | 1.00 |

Examples 9 to 15 had higher light utilization efficiency than Comparative Examples 14 to 20. Further, when the diffusion angle θb/diffusion angle θa is smaller than 0.8, the shape of the diffused light approaches a rectangular shape.

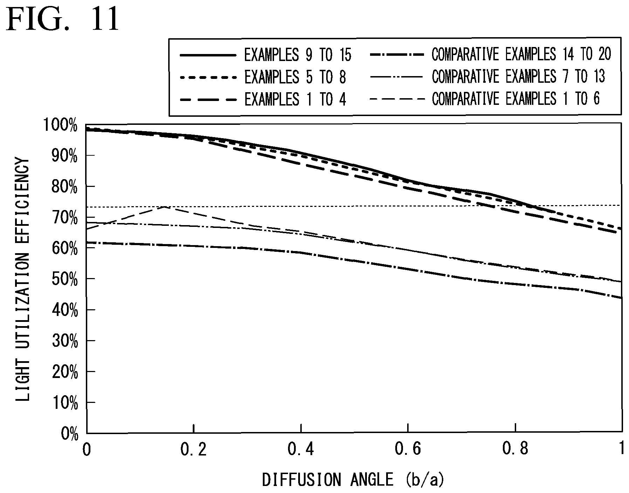

Further, the results of these examples and comparative examples are summarized in FIG. 11. As shown in FIG. 11, if the diffusion angle θb/diffusion angle θa is 0.76 or less, it is possible to make the light utilization efficiency in the examples higher than the maximum value of the light utilization efficiency in the comparative examples.

### [Reference Signs List]

10, 10B, 10G, 10R Coherent light source
20 Fixed diffusion plate
21 Microlens
30 Rotating diffusion plate
40 Integrator lens
100, 101 Optical system
DP Display device
Vc Virtual column line
Vr Virtual row line
θ, θa, θb Diffusion angle

## Claims

1. An optical system (100) comprising:
a coherent light source (10, 10B, 10G, and 10R);
a fixed diffusion plate (20) and a relative movement diffusion plate (30) which intersect with a traveling direction of light emitted from the coherent light source (10, 10B, 10G, and 10R), and
an integrator lens (40),
wherein the fixed diffusion plate (20) emits a light having a rectangular shape from an incident light,
wherein, in the relative movement diffusion plate (30), a diffusion surface of the light moves relative to the incident light,
**characterized in that**,
the fixed diffusion plate (20) is a microlens array in which a plurality of microlenses (21) are arranged in a matrix in a plan view,
wherein the integrator lens (40) is behind the fixed diffusion plate (20) and the relative movement diffusion plate (30) in the traveling direction of the light,
wherein the microlens array has basic cell regions, and the basic cell regions are bounded by
a plurality of virtual column lines (Vc) each of which passes through an average position in a row direction of centers of the microlenses (21) arranged in a column direction among the plurality of microlenses (21) and extends in the column direction, and
a plurality of virtual row lines (Vr) each of which passes through an average position in a column direction of centers of the microlenses (21) arranged in a row direction among the plurality of microlenses (21) and extends in the row direction, and
wherein a ratio of a long side to a short side of the integrator lens (40) is substantially the same as a ratio of a long side to a short side of each of the basic cell regions.

2. The optical system (100) according to claim 1, wherein the fixed diffusion plate (20) and the relative movement diffusion plate (30) are arranged in the order of the fixed diffusion plate (20) and the relative movement diffusion plate (30) in the traveling direction of the light.

3. The optical system (100) according to claim 1, wherein the fixed diffusion plate (20) and the relative movement diffusion plate (30) are arranged in the order of the relative movement diffusion plate (30) and the fixed diffusion plate (20) in the traveling direction of the light.

4. The optical system (100) according to any one of claims 1 to 3, wherein the relative movement diffusion plate (30) is a rotating diffusion plate that is rotatable and a rotating surface of the relative movement diffusion plate (30) intersects with the traveling direction of the light.

5. The optical system (100) according to any one of claims 1 to 4, wherein, in the relative movement diffusion plate (30), convex lenses or concave lenses with random radii of curvature are randomly disposed on the diffusion surface.

6. The optical system (100) according to any one of claims 1 to 5,
wherein, when a diffusion angle of the fixed diffusion plate (20) is θa and a diffusion angle of the relative movement diffusion plate (30) is θb,
θb/θa ≤ 0.76 is satisfied.

7. A display device (DP) comprising the optical system (100) according to any one of claims 1 to 6.

8. A projection device comprising the optical system (100) according to any one of claims 1 to 6.

9. An illumination device comprising the optical system (100) according to any one of claims 1 to 6.

10. The optical system (100) according to any one of claims 1 to 6,
wherein there is no non-lens area between the microlenses (21),
ridgelines are formed between the microlenses (21),
a height and a direction of the ridgelines are irregular, and
the adjacent ridgelines are not parallel to each other.

## Patentansprüche

1. Ein optisches System (100), umfassend:
eine kohärente Lichtquelle (10, 10B, 10G und 10R);
eine feststehende Diffusionsplatte (20) und eine Relativbewegungsdiffusionsplatte (30), die eine Ausbreitungsrichtung von Licht schneiden, das von der kohärenten Lichtquelle (10, 10B, 10G und 10R) emittiert wird, und
eine Integratorlinse (40),
wobei die feststehende Diffusionsplatte (20) aus einem einfallenden Licht ein Licht mit einer rechteckigen Form emittiert,
wobei sich bei der Relativbewegungsdiffusionsplatte (30) eine Diffusionsfläche des Lichts relativ zu dem einfallenden Licht bewegt,
**dadurch gekennzeichnet, dass**
die feststehende Diffusionsplatte (20) eine Mikrolinsenanordnung ist, in der eine Mehrzahl von Mikrolinsen (21) in einer Draufsicht in einer Matrix angeordnet ist,
wobei die Integratorlinse (40) in der Ausbreitungsrichtung des Lichts hinter der feststehenden Diffusionsplatte (20) und der Relativbewegungsdiffusionsplatte (30) liegt,
wobei die Mikrolinsenanordnung Grundzellbereiche aufweist und die Grundzellbereiche begrenzt sind durch
eine Mehrzahl virtueller Spaltenlinien (Vc), von denen jede durch eine durchschnittliche Position in einer Zeilenrichtung von Mittelpunkten der Mikrolinsen (21) verläuft, die unter der Mehrzahl von Mikrolinsen (21) in einer Spaltenrichtung angeordnet sind, und sich in der Spaltenrichtung erstreckt, und
eine Mehrzahl virtueller Zeilenlinien (Vr), von denen jede durch eine durchschnittliche Position in einer Spaltenrichtung von Mittelpunkten der Mikrolinsen (21) verläuft, die unter der Mehrzahl von Mikrolinsen (21) in einer Zeilenrichtung angeordnet sind, und sich in der Zeilenrichtung erstreckt, und
wobei ein Verhältnis einer langen Seite zu einer kurzen Seite der Integratorlinse (40) im Wesentlichen gleich einem Verhältnis einer langen Seite zu einer kurzen Seite jedes der Grundzellbereiche ist.

2. Das optische System (100) nach Anspruch 1, wobei die feststehende Diffusionsplatte (20) und die Relativbewegungsdiffusionsplatte (30) in der Ausbreitungsrichtung des Lichts in der Reihenfolge der feststehenden Diffusionsplatte (20) und der Relativbewegungsdiffusionsplatte (30) angeordnet sind.

3. Das optische System (100) nach Anspruch 1, wobei die feststehende Diffusionsplatte (20) und die Relativbewegungsdiffusionsplatte (30) in der Ausbreitungsrichtung des Lichts in der Reihenfolge der Relativbewegungsdiffusionsplatte (30) und der feststehenden Diffusionsplatte (20) angeordnet sind.

4. Das optische System (100) nach einem der Ansprüche 1 bis 3, wobei die Relativbewegungsdiffusionsplatte (30) eine rotierende Diffusionsplatte ist, die drehbar ist, und eine Rotationsfläche der Relativbewegungsdiffusionsplatte (30) die Ausbreitungsrichtung des Lichts schneidet.

5. Das optische System (100) nach einem der Ansprüche 1 bis 4, wobei bei der Relativbewegungsdiffusionsplatte (30) konvexe Linsen oder konkave Linsen mit zufälligen Krümmungsradien zufällig auf der Diffusionsfläche angeordnet sind.

6. Das optische System (100) nach einem der Ansprüche 1 bis 5,
wobei, wenn ein Diffusionswinkel der feststehenden Diffusionsplatte (20) θa ist und ein Diffusionswinkel der Relativbewegungsdiffusionsplatte (30) θb ist,
θb/θa ≤ 0,76 erfüllt ist.

7. Eine Anzeigevorrichtung (DP), umfassend das optische System (100) nach einem der Ansprüche 1 bis 6.

8. Eine Projektionsvorrichtung, umfassend das optische System (100) nach einem der Ansprüche 1 bis 6.

9. Eine Beleuchtungsvorrichtung, umfassend das optische System (100) nach einem der Ansprüche 1 bis 6.

10. Das optische System (100) nach einem der Ansprüche 1 bis 6,
wobei zwischen den Mikrolinsen (21) kein Nicht-Linsenbereich vorhanden ist, zwischen den Mikrolinsen (21) Gratlinien gebildet sind, eine Höhe und eine Richtung der Gratlinien unregelmäßig sind und die benachbarten Gratlinien nicht parallel zueinander sind.

## Revendications

1. Un système optique (100) comprenant :
une source de lumière cohérente (10, 10B, 10G et 10R) ;
une plaque de diffusion fixe (20) et une plaque de diffusion à mouvement relatif (30) qui coupent une direction de propagation de la lumière émise par la source de lumière cohérente (10, 10B, 10G et 10R), et
une lentille intégratrice (40),
dans lequel la plaque de diffusion fixe (20) émet une lumière ayant une forme rectangulaire à partir d'une lumière incidente,
dans lequel, dans la plaque de diffusion à mouvement relatif (30), une surface de diffusion de la lumière se déplace par rapport à la lumière incidente,
**caractérisé en ce que**,
la plaque de diffusion fixe (20) est un réseau de microlentilles dans lequel une pluralité de microlentilles (21) sont agencées en matrice en vue en plan,
dans lequel la lentille intégratrice (40) est derrière la plaque de diffusion fixe (20) et la plaque de diffusion à mouvement relatif (30) dans la direction de propagation de la lumière,
dans lequel le réseau de microlentilles comporte des régions de cellules élémentaires, et les régions de cellules élémentaires sont délimitées par
une pluralité de lignes de colonne virtuelles (Vc) dont chacune passe par une position moyenne dans une direction de rangée des centres des microlentilles (21) agencées dans une direction de colonne parmi la pluralité de microlentilles (21) et s'étend dans la direction de colonne, et
une pluralité de lignes de rangée virtuelles (Vr) dont chacune passe par une position moyenne dans une direction de colonne des centres des microlentilles (21) agencées dans une direction de rangée parmi la pluralité de microlentilles (21) et s'étend dans la direction de rangée, et
dans lequel un rapport d'un côté long à un côté court de la lentille intégratrice (40) est sensiblement le même qu'un rapport d'un côté long à un côté court de chacune des régions de cellules élémentaires.

2. Le système optique (100) selon la revendication 1, dans lequel la plaque de diffusion fixe (20) et la plaque de diffusion à mouvement relatif (30) sont agencées dans l'ordre de la plaque de diffusion fixe (20) et de la plaque de diffusion à mouvement relatif (30) dans la direction de propagation de la lumière.

3. Le système optique (100) selon la revendication 1, dans lequel la plaque de diffusion fixe (20) et la plaque de diffusion à mouvement relatif (30) sont agencées dans l'ordre de la plaque de diffusion à mouvement relatif (30) et de la plaque de diffusion fixe (20) dans la direction de propagation de la lumière.

4. Le système optique (100) selon l'une quelconque des revendications 1 à 3, dans lequel la plaque de diffusion à mouvement relatif (30) est une plaque de diffusion rotative qui est apte à tourner et une surface de rotation de la plaque de diffusion à mouvement relatif (30) coupe la direction de propagation de la lumière.

5. Le système optique (100) selon l'une quelconque des revendications 1 à 4, dans lequel, dans la plaque de diffusion à mouvement relatif (30), des lentilles convexes ou des lentilles concaves ayant des rayons de courbure aléatoires sont disposées aléatoirement sur la surface de diffusion.

6. Le système optique (100) selon l'une quelconque des revendications 1 à 5,
dans lequel, lorsqu'un angle de diffusion de la plaque de diffusion fixe (20) est θa et qu'un angle de diffusion de la plaque de diffusion à mouvement relatif (30) est θb,
θb/θa ≤ 0,76 est satisfait.

7. Un dispositif d'affichage (DP) comprenant le système optique (100) selon l'une quelconque des revendications 1 à 6.

8. Un dispositif de projection comprenant le système optique (100) selon l'une quelconque des revendications 1 à 6.

9. Un dispositif d'éclairage comprenant le système optique (100) selon l'une quelconque des revendications 1 à 6.

10. Le système optique (100) selon l'une quelconque des revendications 1 à 6,
dans lequel il n'y a aucune zone sans lentille entre les microlentilles (21), des lignes de crête sont formées entre les microlentilles (21), une hauteur et une direction des lignes de crête sont irrégulières, et les lignes de crête adjacentes ne sont pas parallèles les unes aux autres.
